# EUROPEAN PATENT APPLICATION

(11) **EP 4 700 298 A1**
(43) Date of publication of application: **25.02.2026**
(21) Application number: 25194468.2
(22) Date of filing: 06.08.2025
(51) Int. Cl.: F24D 11/00, F28D 20/00, H02J 3/28

(54) **LARGE-CAPACITY HIGH-TEMPERATURE BATTERY**

(30) Priority: 19.08.2024 CZ 20240312
(71) Applicant: SPGroup a.s., 11000 Praha (CZ)
(72) Inventor: Sehnal, Pavel, 11000 Praha (CZ)
(74) Representative: Pavlica, Tomas

(57) **Abstract**

The present invention relates to a large-capacity high-temperature battery (1) for the accumulation of thermal energy transformed from electrical energy, especially from the photovoltaic power plant (3) system of a building (2), wherein the battery (1) comprises an energy reservoir (10) with thermal insulation (12) arranged on the walls of the energy reservoir (10), an accumulator medium (13) in the form of a solid granular material forming the filling of the energy reservoir (10), at least one heating electric element (14), which is surrounded by the accumulator medium (13) for heating the accumulator medium (10) by heating at least one heating electric element (14), and which is adapted for connection to the outputs of the photovoltaic power plant (3) and to the control system (4) of the photovoltaic power plant (3), and at least one discharge pipe (15), which is connected to the hot branch pressure compensator (16a) and to the cold branch pressure compensator (16b) for balancing the pressure in the discharge pipe (15), where the discharge pipe (15) is filled with a liquid heat-transfer medium and surrounded by the accumulator medium (13) for transferring the thermal energy accumulated in the accumulator medium (13) to the heat-transfer medium in the discharge pipe (15) for supplying thermal energy to the heating circuit of the building (2), and which is adapted for connection to a heat exchanger (7) for connection to the heating circuit of the building (2), wherein the energy reservoir (10) is adapted for placement below the ground surface (20) and is preferably formed by a standardized shipping container (11), especially of a size of 20 feet or 40 feet. The invention further relates to an energy storage system (100) comprising such a battery (1). The high-temperature battery according to the invention provides high capacity and thus the possibility of long-term storage of a larger amount of energy, i.e., not only surpluses from the photovoltaic system but also from the grid when the energy price is negative.

## Description

### Technical Field

The present invention relates to a large-capacity high-temperature battery, particularly suitable for family houses with installed photovoltaic panels and a photovoltaic power plant, for energy storage, and to an energy storage system comprising such a battery.

### Prior Art

Photovoltaic systems can currently be autonomous (so-called off-grid), connected to the electrical grid (so-called on-grid), or hybrid systems that operate in both modes as needed. It is also common for energy to be used for direct consumption, or for surplus energy to be "fed" into the public electricity grid (in the case of on-grid or hybrid systems), or to be stored in an accumulator battery. The accumulated electrical energy during periods of surplus then provides the opportunity to use this energy during times of shortage. Currently, various accumulator batteries of different sizes, accumulation methods, and capacities are available on the market. In particular, the capacity of the accumulator battery is the main factor regarding the amount of energy that can be stored in the accumulator battery when needed. Most available accumulator batteries, especially those used for installation in family houses, provide relatively small capacities, primarily intended to store small amounts of energy, especially only daily energy surpluses that are not consumed in direct use. None of the existing solutions aim to provide a large-capacity accumulator battery for the purpose of long-term storage of larger amounts of energy, i.e., not only surpluses from the photovoltaic system but also from the grid when the energy price is negative.

### Subject of Invention

The aim of the present invention is thus to overcome the above-mentioned shortcomings of the prior art and to provide a large-capacity high-temperature battery, especially for buildings like family houses.

The objective according to the invention is achieved by a large-capacity high-temperature battery according to claim 1 and by an energy storage system comprising such a battery according to claim 6.

The basis of the large-capacity high-temperature battery according to the present invention is to provide a large-capacity high-temperature battery for installation in buildings, especially in family houses. The battery can be installed, for example, as part of a new building, where for example the photovoltaic system is installed simultaneously with the new building, it can be installed as part of reducing the building's energy demands, where a photovoltaic system and the battery can be installed together in an existing building, or it is also possible to add it to buildings.

The battery system according to the invention may be modular.

The battery itself contains a reservoir for accumulated thermal energy, preferably a shipping container, in particular a standardized shipping container, hereinafter also referred to simply as a container, for example, of a size of twenty feet (20'), i.e., with external dimensions of 6.096 m × 2.438 m × 2.591 m, or forty feet (40'), i.e., with external dimensions of 12.192 m × 2.438 m × 2.591 m. Shipping containers of other sizes can also be used. This container may form the outer casing of the reservoir, i.e., the battery, and is intended for placement below ground level, preferably with the top side of the container at a depth of, for example, 30-70 cm, preferably, for example, 40 cm, 50 cm, or 60 cm below ground level, which on the one hand still allows relatively easy access to the reservoir, but also allows the container to be covered so that no undesirable surface structure is present on the surface. However, the reservoir for accumulated thermal energy may also be constructed, in particular built directly on site, and may especially have virtually any dimensions.

In particular, an excavation may be provided for the reservoir of accumulated thermal energy, especially in a preferred embodiment for the placement of the container.

In an embodiment where the reservoir is formed by a shipping container, the excavation may be made as follows: the bottom layer in the excavation consists, for example, of sand, e.g., with a thickness of at least 20 cm, 30 cm, 40 cm, or preferably at least 50 cm. On this base layer of sand, the container itself is arranged, and the space between the container and the sides of the excavation may be filled, for example, with gravel, preferably with a minimum width of 20 cm, 30 cm, 40 cm, or preferably at least 50 cm. The width of the gravel may vary along the height of the reservoir. The height of the gravel layer preferably matches that of the container. Any materials suitable as construction or building materials may be used for the individual layers of the excavation. Preferably, these layers serve as additional insulation, so it is advantageous to use materials that also have insulating properties.

The reservoir is covered from above with thermal insulation, preferably with a thickness of at least 20 cm, 30 cm, 40 cm, or preferably at least 50 cm. The insulation may be, for example, FoamGlas or foam glass, which is also suitable as a construction material with high compressive strength. The top side of the reservoir and the layer of thermal insulation above it may be adapted to allow access in case of repair or replacement of at least one heating electric element (described below), in particular, they may contain at least one mounting opening, preferably a set of mounting openings.

The walls of the reservoir, preferably all walls in a preferred embodiment of the container, and preferably from the inside, are covered with a layer of thermal insulation, e.g., with a thickness of at least 20 cm, 30 cm, 40 cm, or preferably at least 50 cm and even more preferably with a thickness of 60 cm and with a low thermal conductivity coefficient λ in the range of 0.03 - 0.04 W/(m.K). A suitable material that can be used as thermal insulation is, for example, FoamGlas or foam glass, which is also suitable as a construction material with high compressive strength.

The battery further comprises a filling, which fills the interior of the reservoir and constitutes the actual accumulator medium of the battery, which is heated and subsequently cooled, i.e., the medium in which heat is accumulated. The accumulator medium is a solid granular material, in particular, the accumulator medium may be, for example, stone dust, slag, expanded clay, preferably gravel, and even more preferably sand or sandstone, as they have even higher capacity than the other materials mentioned, preferably silica sand or crushed sandstone, for example, with a grain size of 1-3 mm. In another embodiment, gravel or stone dust may be used, for example, with a grain size of 0-3 mm.

The above-mentioned materials are also advantageous in terms of the temperature operating range. For example, the operating range of sand as an accumulator medium is from a minimum temperature of approximately 40°C at the time of minimum battery capacity utilization, up to a maximum heating temperature, which can be up to 280°C at the time of maximum battery capacity utilization.

The accumulator medium is heated by at least one heating electric element, preferably a set of heating electric elements, which may have a total output of 8 kW to 15 kW, preferably, for example, 10 kW, and which are arranged inside the reservoir, preferably in a ceramic casing or casings, which serve as a protective cover. At least one heating electric element, preferably arranged in a protective casing, is in contact with the accumulator medium, which surrounds it, so that when at least one electric element is heated, this accumulator medium is also heated.

At least one heating electric element is preferably arranged vertically, attached below the top side of the container, where vertical arrangement means vertical arrangement in the operating position of the battery according to the invention. This arrangement is advantageous because it provides the possibility of a relatively easily accessible mounting opening or openings in the top side of the reservoir, for example, the container, and also the corresponding mounting opening or openings in the layer of thermal insulation above it, in case of repair or need to replace the heating electric element.

In a preferred embodiment, the reservoir may contain at least 2, at least 3, 4, at least 5, or at least 6 heating electric elements, which may be arranged at mutual distances, for example, equidistantly. In particular, in a preferred embodiment, a 20-foot container may contain, for example, six heating electric elements, or a 40-foot container may contain, for example, twelve heating electric elements.

At least one heating electric element is arranged below the top side of the reservoir by means of fastening means in any suitable manner, for example, by screwing a flange to the top wall of the reservoir, or in a preferred embodiment, the container.

At least one heating electric element is connected an electrical distribution network of a facility and/or to a photovoltaic power plant (PV plant) located on or near the building, in a preferred embodiment, especially on the roof of the building, especially a family house, to the outputs from the PV plant in the same way as conventional batteries according to the current state of the art. The control of switching on at least one heating electric element may also be carried out in a known manner, for example, within the control system of the PV plant, depending on whether the electrical energy from the PV plant is to be consumed directly or stored in the battery according to the invention. It is also possible, for example, to store electrical energy in a battery according to the invention at a time when the distribution network has a surplus of electrical energy and the price of energy on the market is zero or negative. Advantageously, the connection to the electrical grid can also be made via the PV plant control system, which ensures the possibility of accumulating thermal energy not only from surpluses from the photovoltaic power plant of the family house but also directly from the grid, at times when the electricity price on the market is zero or negative. These connections can again be implemented in a suitable conventional manner, as is common with existing batteries.

In a preferred embodiment, the battery may include an automatic battery charging system, which automatically detects a zero or negative electricity price and, at times when the price is zero or negative, automatically switches on at least one heating electric element to charge the battery. Such systems are known to those skilled in the art, so it is not necessary to describe the details of the connection and operation of such a system in detail.

The battery further comprises a discharge pipe, in particular, preferably a horizontal discharge pipe, which is also located inside the reservoir, especially around the perimeter of the reservoir, where horizontal arrangement means horizontal arrangement in the operating position of the battery according to the invention. The discharge pipe is again in contact with the accumulator medium, which surrounds it, and is preferably a metal pipe, preferably stainless steel or copper, for transferring the thermal energy accumulated in the accumulator medium to the heat-transfer medium in the discharge pipe for supplying heat to the heating circuit of the building. This discharge pipe is connected to a cold branch pressure compensator and a hot branch pressure compensator for balancing pressures in the discharge pipe and contains a liquid heat-transfer medium, e.g., a liquid with which the discharge pipe is filled. Examples may be special oils with an operating temperature of up to 300 °C, e.g., a heat-transfer fluid available under the trade name TERMOFROST G with an operating temperature of up to 280 °C.

Finally, the energy storage system includes a heat exchanger for connecting the battery according to the invention to the heating circuit of the building, especially a family house. Preferably, a hydro module of a heat pump can be used, or possibly a control system that regulates the discharge branch to the required temperature for heating and for domestic hot water. The connection of the battery according to the invention to the heating circuit of the family house can be made in the same way as with existing batteries, so it is not necessary to describe this connection in more detail.

Alternatively, or additionally, the battery according to the invention can also be connected to a device for reconverting the accumulated thermal energy into electrical energy, which expands the possibilities of using the accumulated thermal energy and thus provides a comprehensive system for storing and reusing energy. Such devices for reconverting accumulated thermal energy into electrical energy are known in the art and therefore it is not necessary to describe the connection of such a device in more detail.

From the above description, it is clear that the high-temperature large-capacity battery according to the present invention is suitable especially for connection to PV plant systems and heating systems currently commonly used, especially in family houses. A person skilled in the art will therefore be familiar with the principles and possibilities of connecting the battery according to the invention to these circuits.

It will also be apparent to a person skilled in the art that neither the above parameters, especially dimensions, nor the exemplary embodiment of the present invention described below, affect the basic principle of the invention and are therefore not limiting for the creation of the present invention. On the contrary, most values, especially dimensions, can be very well adapted to the requirements of a particular implementation.

### Brief Explanation of Drawings

Fig. 1 Schematic representation of the arrangement of an energy storage system containing a large-capacity high-temperature battery according to the invention and its arrangement
Fig. 2 Schematic representation of the arrangement of elements of the large-capacity high-temperature battery according to the invention in a top sectional view
Fig. 3 Graph of PV plant output and consumption for a family house over the course of a year
Fig. 4 Graph of temperatures of the large-capacity high-temperature battery according to the invention for a family house over the course of a year

### Examples of Embodiments of the Invention

The basis of the large-capacity high-temperature battery 1 according to the present invention is to provide a large-capacity high-temperature battery for installation, especially in family houses 2. The battery 1 can be installed, for example, as part of a new building, where the photovoltaic system is installed simultaneously with the new building, it can be installed as part of reducing the building's energy demands, where a photovoltaic system and the battery 1 can be installed together in an existing building, or it is also possible to add it to buildings that already have a photovoltaic system installed.

The battery system 1 according to the invention may be modular in an exemplary embodiment.

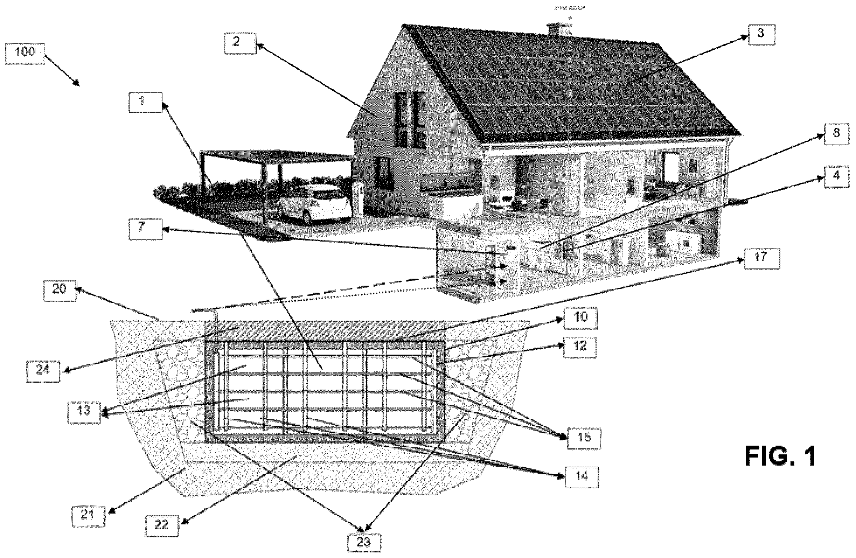

Fig. 1 shows an exemplary connection of an energy storage system 100, which contains a battery 1 according to the present invention, as well as a preferred placement of the battery 1 according to the present invention.

The battery 1 itself contains, in this exemplary embodiment, a standardized shipping container 11, especially of a size of twenty feet or forty feet, which forms the outer casing of the battery 1, with this container 11 arranged below the ground surface 20. In particular, in a preferred embodiment, an excavation 21 is provided for placing the container 11, with the bottom base layer 22 in the excavation 21 consisting, for example, of sand, e.g., with a thickness of 50 cm. On this base layer 22 of sand, the container 11 itself is arranged, and the space between the container 11 and the sides of the excavation 21 may be filled, for example, with gravel 23, preferably with a minimum width of 50 cm. The height of the gravel layer 23 preferably matches the height of the container 11. The container 11 is preferably covered from above 17 with thermal insulation 24, preferably FoamGlas or foam glass with a thickness of 50 cm.

All walls of the container 11 are covered with a layer of thermal insulation 12 with a thickness of 60 cm and a low thermal conductivity coefficient λ in the range of 0.03 - 0.04 W/(m.K). A suitable material that can be used as thermal insulation 12 is, for example, in this exemplary embodiment, FoamGlas or foam glass with a value of λ=0.04 W/(mK), which is also suitable as a construction material with high compressive strength.

The battery 1 further comprises the filling of the container 11, which constitutes the actual accumulator medium 13 of the battery 1, which is heated and subsequently cooled, and in which heat is thus accumulated. This accumulator medium 13 may be, for example, stone dust, preferably gravel, and even more preferably sandstone or sand, which is also used in this exemplary embodiment. In the exemplary embodiment, it is especially silica sand with a grain size of 1-3. In another embodiment, gravel or stone dust with a grain size of 0-3 may be used.

However, it can be stated that sand is more advantageous because it has a higher capacity than stone dust. For example, for comparison:
For a 40' container 11, the battery 1 with sand can achieve a capacity of up to 11.42 MWh. With gravel, it can achieve a capacity of 9.70 MWh. For a 20' container 11, the battery 1 with sand can achieve a capacity of up to 5.57 MWh. With gravel, it can achieve a capacity of 4.73 MWh.

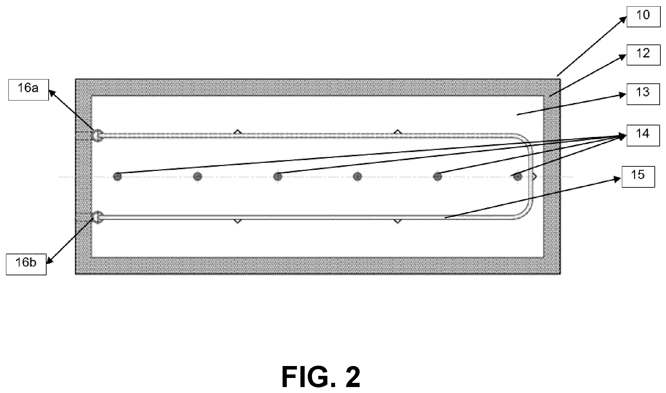

The heating electric elements 14 are surrounded by the accumulator medium 13, so the accumulator medium 13 is heated by the heating electric elements 14, which in this preferred embodiment may have a total output of 10 kW, and which are preferably placed in a ceramic casing (not shown). In Fig. 1, only three heating electric elements 14 out of six are marked with reference numerals for clarity. The heating electric elements 14 are preferably arranged vertically below the top side 17 of the container 11, where they are conventionally fixed by common suitable fastening means, with mounting openings (not shown) possibly constructed in the top side 17 in case of the need to replace or repair the heating electric elements 14. In a preferred embodiment, a 20" container 11 may contain, for example, six heating electric elements 14, or a 40" container 11 may contain, for example, twelve heating electric elements 14. The heating electric elements 14 may be arranged at mutual distances, equidistantly (Figs. 1, 2).

The heating electric elements 14 are connected to the photovoltaic power plant 3 (PV plant) located on the roof of the family house 2, preferably oriented south/southwest, to the outputs from the PV plant 3 and to the control system 4 of the PV plant 3 for controlling the switching of the heating electric elements 14, depending on whether the electrical energy from the PV plant is to be consumed directly or stored in the battery according to the invention. Furthermore, connection to the electrical grid is possible via the control system 4 of the PV plant 3.

In a preferred embodiment, the battery 1 may include an automatic battery charging system 8, which automatically detects a zero or negative electricity price and, at times when the price is negative or zero, automatically switches on the heating electric elements 14 to charge the battery 1.

The battery 1 further comprises a discharge pipe 15, which is also located inside the container 11 and is also surrounded by the accumulator medium 13. The discharge pipe 15 is especially arranged in horizontal loops, which preferably run essentially along the inner perimeter of the container 11. In Fig. 1, only three horizontal loops are marked with reference numerals for clarity. The detail of a horizontal loop of the discharge pipe 15 is schematically shown in Fig. 2, which represents a view of the container 11 in a top section. This is a metal pipe, preferably stainless steel or copper. This discharge pipe 15 is connected to the hot branch pressure compensator 16a and the cold branch pressure compensator 16b for balancing pressures in the discharge pipe 15. In particular, each of the horizontal loops is connected to the hot branch pressure compensator 16a and the cold branch pressure compensator 16b, again shown in Figs. 1 or 2.

The discharge pipe 15 contains a heat-transfer medium (not shown), e.g., a liquid with which the discharge pipe 15 is filled. Examples may be special heat-transfer oils with an operating temperature of up to 300°C, or, for example, a heat-transfer fluid available under the trade name TERMOFROST G with an operating temperature of up to 280°C.

Finally, the energy storage system 100 includes a heat exchanger 7 for connecting the battery 1 to the heating systems of the family house (heating system not shown). The hydro module of a heat pump can be used directly. The connection of the battery 1, i.e., the discharge pipe 15, to the heat exchanger 7 is shown in Fig. 1 only illustratively, with dashed arrows, with two different types of arrows (dashed and dotted) illustratively indicating the hot and cold branches of the circuit.

### Example

The high-temperature and large-capacity battery 1 according to the exemplary embodiment described above can provide, for a 40' container 11, an output of up to 9,817 kWh, which means that for a family house 2 with a heating consumption below 5,000 kWh per year, this battery 1 according to the present invention is sufficient to heat such a family house 2 for the entire year.

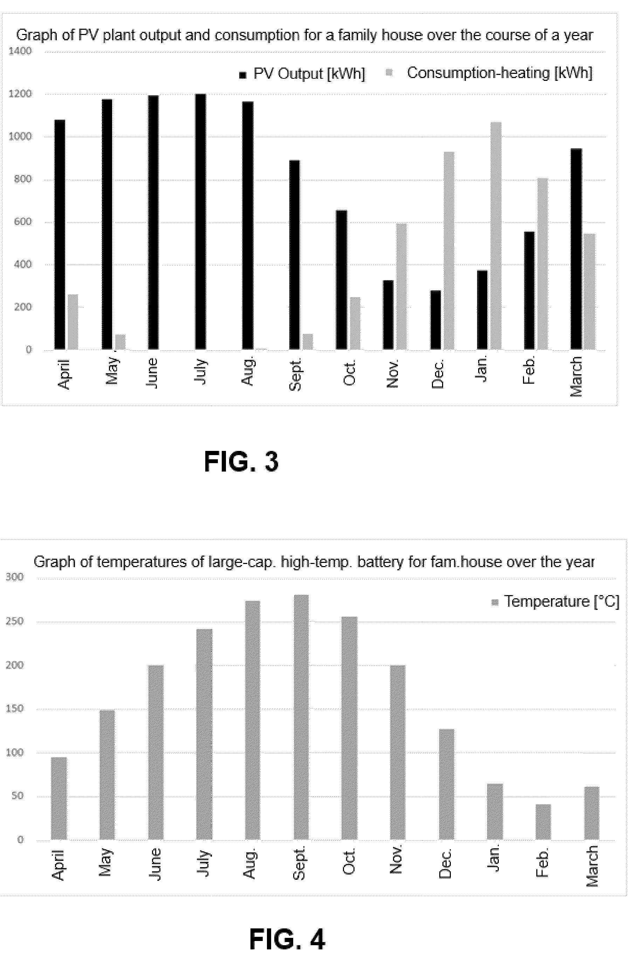

The following table presents, for each month of the year, the performance parameters of the high-temperature large-capacity battery 1 according to the invention, especially the consumption values, i.e., heating in kWh, where the total sum for the year is 4,600 kWh, and the PV plant 3 output, again in kWh, where the total sum is 9,817 kWh. These values are graphically shown in Fig. 3. At the same time, the table presents temperature values (at an initial temperature of 50°C) that the battery 1 according to the present invention reaches during the year, with these temperatures ranging from approximately 40°C up to approximately 280°C. These values are graphically shown in Fig. 4.

**Table 1: Performance parameters of the high-temperature, large-capacity battery according to the invention**

| **Month** | **Consumption** - **heating** | **PV plant output** | **Temperature (°C)** |
|---|---|---|---|
| | **kWh** | **kWh** | **50,0000** |
| April | 261 | 1079 | **94,3127** |
| May | 74 | 1172 | **147,7988** |
| June | 0 | 1189 | **199,1845** |
| July | 0 | 1199 | **241,2383** |
| August | 6 | 1164 | **273,5026** |
| September | 75 | 889 | **280,5030** |
| October | 247 | 654 | **255,6188** |
| November | 591 | 326 | **199,0135** |
| December | 930 | 279 | **126,6495** |
| January | 1065 | 370 | **64,2193** |
| February | 807 | 552 | **40,5452** |
| March | 545 | 943 | **61,0738** |
| **Total** | **4600** | **9817** | |

### Industrial Applicability

The large-capacity high-temperature battery according to the present invention is particularly suitable for installation in a family house with installed photovoltaic panels and a photovoltaic power plant, for energy storage. The battery can be installed, for example, as part of a new building, where the photovoltaic system is installed simultaneously with the new building, it can be installed as part of reducing the building's energy demands, where a photovoltaic system and the battery can be installed together in an existing building, or it is also possible to add it to buildings that already have a photovoltaic system installed.

### List of Reference Numerals

- 1: battery
- 10: reservoir
- 11: container
- 12: thermal insulation
- 13: accumulator medium
- 14: heating electric element
- 15: discharge pipe
- 16a: hot branch pressure compensator
- 16b: cold branch pressure compensator
- 17: top wall of the reservoir
- 2: building / family house
- 3: photovoltaic power plant (PV plant)
- 4: control system of the photovoltaic power plant
- 7: heat exchanger
- 8: automatic high-temperature battery charging system
- 20: ground surface
- 21: excavation
- 22: base layer in the excavation
- 23: gravel
- 24: thermal insulation above the reservoir
- 100: energy storage system

## Claims

1. Large-capacity high-temperature battery (1) for accumulation of thermal energy , e.g. the thermal energy transformed from electrical energy, especially from the photovoltaic power plant (3) system of a building (2), wherein the battery (1) comprises an energy reservoir (10) with thermal insulation (12) arranged on the walls of the energy reservoir (10), an accumulator medium (13) in the form of a solid granular material forming the filling of the energy reservoir (10), at least one heating electric element (14), which is surrounded by the accumulator medium (13) for heating the accumulator medium (10) by heating at least one heating electric element (14), and which is adapted for connection to the outputs of the photovoltaic power plant (3) and to the control system (4) of the photovoltaic power plant (3), and at least one discharge pipe (15), which is connected to the hot branch pressure compensator (16a) and to the cold branch pressure compensator (16b) for balancing the pressure in the discharge pipe (15), where the discharge pipe (15) is filled with a liquid heat-transfer medium and surrounded by the accumulator medium (13) for transferring the thermal energy accumulated in the accumulator medium (13) to the heat-transfer medium in the discharge pipe (15) for supplying thermal energy to the heating circuit of the building (2), and which is adapted for connection to a heat exchanger (7) for connection to the heating circuit of the building (2), wherein the energy reservoir (10) is adapted for placement below the ground surface (20).

2. Battery (1) according to claim 1, **characterized in that** the energy reservoir (10) is formed by a standardized shipping container (11) of size 20 feet or 40 feet.

3. Battery (1) according to claim 1 or 2, **characterized in that** the thermal insulation (12) is made of a material with a thermal conductivity coefficient λ in the range of 0.03 - 0.04 W/(m.K), preferably foam glass and/or has a thickness of at least 20 cm, preferably at least 50 cm and even more preferably 60 cm.

4. Battery (1) according to any of the preceding claims, **characterized in that** the accumulator medium (13) is sand, especially silica sand or crushed sandstone with a grain size of 1-3 mm, or gravel with a grain size of 0-3 mm.

5. Battery (1) according to any of the preceding claims, **characterized in that** at least one heating electric element (14) is arranged in the energy reservoir (10) in the operating position vertically so that it is attached to the top wall (17) of the energy reservoir (10), preferably in a protective ceramic casing, where at least one mounting opening for repair or replacement of at least one heating electric element (14) is arranged in the top wall (17) of the energy reservoir (10), and/or the discharge pipe (15) is arranged in the energy reservoir (10) in the operating position horizontally, especially in several horizontal loops, each of which is connected to the hot branch pressure compensator (16a) and to the cold branch pressure compensator (16b), where the loops run essentially along the perimeter of the energy reservoir (10).

6. System (100) for the accumulation of thermal energy transformed from electrical energy and subsequent use of the accumulated thermal energy, especially for heating or heating utility water, **characterized in that** it comprises a photovoltaic power plant (3) arranged on or near the building (2) and a control system (4) of the photovoltaic power plant (3), a large-capacity high-temperature battery (1) according to any of the preceding claims, where at least one heating electric element (14) is connected to the outputs of the photovoltaic power plant (3) and to the control system (4) of the photovoltaic power plant (3) for connection to the photovoltaic power plant (3) or to the electrical grid, and where the discharge pipe (15) is connected via a heat exchanger (7) to the heating circuit of the building (2), wherein the battery (1) is located below the ground surface (20).

7. System (100) according to claim 6, **characterized in that** the system further comprises an automatic battery charging system (8) for automatic detection and automatic switching of at least one heating electric element (14) for charging the battery (1) at times when the electricity price is zero or negative.

8. System (100) according to claim 6 or 7, **characterized in that** the battery (1) is located below the ground surface (20) in an excavation (21) on a base layer (22), where the base layer (22) has a thickness of at least 20 cm, preferably at least 50 cm, where the space between the container (11) and the sides of the excavation (21) is filled with gravel (23), with a width of at least 20 cm, preferably at least 50 cm and/or the energy reservoir (1) is covered from above (17) with thermal insulation (24) with a thickness of at least 20 cm, preferably at least 50 cm.

9. System (100) according to any of claims 6 to 8, **characterized in that** the width of the gravel (23) may vary along the height of the reservoir (10) and/or the height of the gravel layer (23) preferably matches the height of the container (11).
